# EUROPÄISCHE PATENTSCHRIFT

(11) **EP 0 528 374 B1**
(45) Veröffentlichungstag und Bekanntmachung des Hinweises auf die Patenterteilung: **21.02.1996**
(21) Anmeldenummer: 92113899.6
(22) Anmeldetag: 14.08.1992
(51) Int. Cl.: A22C 13/00

(54) **Schlauchförmige Nahrungsmittelhülle mit verbesserten Hafteigenschaften gegenüber dem Füllgut**
Tubular casing for foodstuffs with improved bonding properties for the filling
Enveloppe tubulaire pour aliments ayant une adhérence améliorée à la masse de remplissage

(30) Priorität: 21.08.1991 DE 4127604
(43) Veröffentlichungstag der Anmeldung: 24.02.1993
(73) Patentinhaber: HOECHST AKTIENGESELLSCHAFT, D-65926 Frankfurt am Main (DE)
(72) Erfinder: Hammer, Klaus-Dieter, Dr., W-6500 Mainz-Mombach (DE); Winter, Hermann, W-6200 Wiesbaden (DE)

(56) Entgegenhaltungen:
- EP-A- 0 109 611
- EP-A- 0 400 484
- US-A- 3 451 827
- PATENT ABSTRACTS OF JAPAN, unexamined applications, C Sektion, Band 14, Nr.
- 475, 17. Oktober 1990 THE PATENT OFFICE JAPANESE GOVERNMENT Seite 48 C 770
- CHEMICAL ABSTRACTS, Band 114, Nr. 18, 30. Oktober 1989 Columbus, Ohio, USA TOSHIO TAGUCHI et al. "Chitosan-treated paper for casings.", Seite 139, Spalte 2, Zusammenfassung-Nr. 156 262h

## Beschreibung

Die Erfindung bezieht sich auf eine schlauchförmige Nahrungsmittelhülle auf Basis von Cellulose mit einem auf ihrer inneren und/oder äußeren Oberfläche vorhandenen Überzug, der eine verbesserte Haftung der Hüllen an dem Füllgut bewirkt und insbesondere bei Dauerwurst-Typen ein Abstellen der Hülle während des Reifens verhindert, aber trotzdem ein leichtes Entfernen der Hülle nach dem Reifen ermöglicht. Weiterhin bezieht sich die Erfindung auf die Verwendung der Nahrungsmittelhülle.

Als Haftimprägnierungen sind natürliche Eiweiße (DE-A-609 129) und Harzvorkondensate (DE-B-12 92 708) bekannt, die auf die Innenseite der Nahrungsmittelhülle aufgebracht werden.

Bei der Verwendung von Eiweißen ist die Haftung zwischen Füllgut und Nahrungsmittelhülle jedoch so stark, daß ein zerstörungsfreies Abschälen der Hülle praktisch nicht mehr möglich ist. Andererseits ist bei Verwendung von synthetischen Harzen als Imprägnierung die Haftung schon so gering, daß beispielsweise während des Reifeprozesses einer Dauerwurst die Hülle vom schrumpfenden Füllgut abstellt, was zu einer Faltenbildung führt.

Mit den technischen Fortschritten in der Fleischwarenindustrie steigen auch die Qualitätsanforderungen an Wursthüllen ständig. Immer häufiger werden ganz spezifische Problemlösungen verlangt. Dies trifft auch zu für den Imprägniereffekt, wo Abstufungen zwischen natürlichen Eiweißen und synthetischen Harzen gefragt sind.

Es bestand dementsprechend die Aufgabe, eine Nahrungsmittelhülle zur Verfügung zu stellen, deren Haftungseigenschaft zum Füllgut so bemessen ist, daß bei Befüllung mit Wurstmasse für Dauerwurst-Typen ein Abstellen der Hülle während des Reifens verhindert wird, jedoch eine gute Abschälbarkeit der Hülle nach dem Reifen nach wie vor gewährleistet ist. Gleichzeitig soll die erfindungsgemäße Hülle das Eindringen von cellulytischen Enzymen wie Cellulase behindern, möglichst sogar unterbinden.

Gelöst wird diese Aufgabe durch eine Cellulosehydrat-Nahrungsmittelhülle mit und/oder ohne Faserpapiereinlage, die dadurch gekennzeichnet ist, daß sie eine Imprägnierung aus chemisch mit der Cellulose verknüpftem Chitosan aufweist.

In der europäischen Patentanmeldung EP-A-0502431 wird zwar eine Imprägnierung, bestehend aus Lecithin und mindestens einer weiteren Verbindung, ausgewählt aus Alginat, Chitosan und Casein, vorgeschlagen, eine vorteilhafte Verwendung allein von chemisch mit der Cellulose verknüpftem Chitosan wird dort jedoch nicht erwähnt.

In dem japanischen Patent 1,174,699 (Chemical Abstracts, Vol. 111, 1989, 15626h) ist ein mit Chitosan behandeltes Papier für Wursthüllen beschrieben, bei dem eine Chitosan enthaltende Lösung auf das Papier aufgesprüht wird. Eine chemische Bindung zwischen der im Papier enthaltenen Cellulose und dem Chitosan wird damit aber nicht erzeugt.

In der europäischen Patentanmeldung EP-A-0502432 wird eine Wursthülle auf Basis von Cellulose beschrieben, deren verbesserte Abschälbarkeit darauf beruht, daß die innere Oberfläche einen Überzug aus Alginaten, Alginsäure, Chitosanen oder einer Kombination dieser Wirkstoffe aufweist. Auch hier ist keine chemische Bindung des Überzuges mit der Celulose hergestellt worden.

Bei der erfindungsgemäßen Nahrungsmittelhülle handelt es sich insbesondere um eine künstliche Wursthülle. Der erfindungsgemäße Überzug (Imprägnierung) bewirkt, insbesondere wenn es sich um das für Dauerwürste typische Füllgut handelt, eine ausreichende Haftung zwischen Innenwand und Füllgut, so daß die Hülle beim Reifen der Wurst nicht abstellt. Andererseits kann die Hülle jedoch problemlos nach dem Reifen abgeschält werden, d. h. die Haftung ist so eingestellt, daß ein zerstörungsfreies Abschälen nach wie vor möglich ist.

Die Nahrungsmittelhülle besteht aus einem Trägerschlauch auf Basis von Cellulose und dem erfindungsgemäßen Überzug auf ihrer Innenwand oder ihrer Außenwand oder ihrer Außen- und Innenwand.

Das Basismaterial für den Trägerschlauch ist Cellulose (Zellglas, regenerierte Cellulose, Cellulosehydrat) und wird auf übliche Weise als nahtloser Schlauch durch Koagulation und Regenerieren vorzugsweise aus Viskoselösung hergestellt. Es ist auch möglich, Schläuche mit einer Klebenaht zu verwenden, die durch Falten einer Bahn und Verbinden der Ränder hergestellt werden (EP-A-0 050 702, EP-A-0 058 240). Für die besonders vorteilhafte Verwendung der Hülle zur Herstellung von Würsten vom Dauerwurst-Typ verwendet man einen Trägerschlauch aus Cellulose mit einer Faserverstärkung, die beispielsweise in Form einer Papierbahn in der Wandung des Trägerschlauchs eingebettet ist. Solche faserverstärkten Cellulosehydrathüllen werden hergestellt, indem ein zu einem Schlauch geformtes endloses Faserpapier von außen oder von außen und von innen mit Viskoselösung beaufschlagt wird, welche koaguliert und regeneriert wird.

Die Nahrungsmittelhülle kann als flachgelegter Schlauch, auf eine Rolle aufgewickelt oder in Form von einseitig verschlossenen Hüllenabschnitten zum Füllen mit Füllgut eingesetzt werden. Es lassen sich auch geraffte Schlauchhüllen, sogenannte Raupen, herstellen, wobei man übliche Raffvorrichtungen (US-A-3 988 804) einsetzt. Hierbei hat sich gezeigt, daß mit der erfindungsgemäßen Beschichtung nicht nur der gewünschte Einfluß auf die Haftung zwischen Füllgut und Hülleninnenwand ausgeübt wird, sondern daß sich auch noch zusätzliche Vorteile beim Aufwickeln, Lagern, Ratten und Verarbeiten ergeben. So sorgt die Beschichtung dafür, daß die auf einer Rolle aufgewickelten Schläuche nicht haften oder verkleben. Auch Hüllenabschnitte verkleben bei längerer Lagerung nicht und lassen sich vor dem Befüllen mit Wurstbrät, insbesondere auf automatischen Füllmaschinen, problemlos öffnen. Ferner sind die Schläuche besonders gleitfähig und weich und lassen sich deshalb problemlos raffen.

Der Überzug besteht erfindungsgemäß aus chemisch mit der Cellulose verknüpftem Chitosan. Bei Chitosan handelt es sich um teilverseiftes Poly-N-acetylglucosamin, das aus dem Chitin von Schalentieren isoliert wird. Jedes Molekül dieses natürlichen Polymeren enthält entweder eine Amino- oder eine Amidgruppe. Obwohl Carboxylgruppen völlig fehlen, wird eine stärkere Affinität als mit synthetischen Harzen erzielt.

Die freien Aminogruppen stehen zur chemischen Verknüpfung mit dem Cellulosehydrat zur Verfügung. Die Verknüpfung gelingt problemlos mit Mono- und Dialdehyden, wie Formaldehyd, Glyoxal oder Glutardialdehyd.

Chitosan wird in schwachsaurer wäßriger Lösung mit 0,3 bis 10 Gew.-%, vorzugsweise 0,5 bis 6 Gew.-%, (bezogen auf die eingesetzte Menge an Chitosan) eines Aldehyds versetzt und nach kurzzeitigem Stehen in einer Konzentration (Chitosan) von 0,2 bis 4 Gew.-%, vorzugsweise 0,5 bis 2,5 Gew.-%, (bezogen auf das Gesamtgewicht der Lösung) als Imprägnierlösung angewandt.

Die Chitosankonzentration der Imprägnierlösung ist den verschiedenen Hüllentypen exakt anzupassen. Für reine Cellulosehüllen ist sie zweckmäßig zwischen 0,5 und 1 Gew.-% zu wählen und ergibt eine Auftragsmenge von 25 bis 60 mg/m² Hülle. Für außenviskosierte Faserdarmhüllen, also solche, die nur von außen mit Viskose beaufschlagt worden sind, liegt die Chitosan-Konzentration zweckmäßig zwischen 0,8 und 2 Gew.-% und ergibt eine Auftragsmenge von 80 bis 150 mg/m² Hülle. Für doppelviskosierte Hüllen, also solche, die von außen und innen mit Viskose beaufschlagt worden sind, liegt die Chitosan-Konzentration zweckmäßig zwischen 1,5 und 2,5 Gew.-% und ergibt eine Auftragsmenge von 40 bis 100 mg/m² Hülle.

Bei Hüllentypen mit glatter innerer Oberfläche ist es vorteilhaft, die Imprägnierlösung mit 0,5 bis 6 Gew.-% einer Ölemulsion (z. B. ®Softenol 308 der Fa. Dynamit Nobel; synthetisches Triglycerid mit Fettsäuren von C₈ bis C₁₀) zu versetzen, um Haften oder Verkleben bei längerer Rollenlagerung zu verhindern.

Eine Innenpräparation mit Chitosan eignet sich überraschend auch zur Verankerung einer PVDC- oder Acrylat-Beschichtung; dafür wird eine 1,0- bis 1,5%ige Chitosan-Lösung verwendet, womit eine Auftragsmenge von 40 bis 60 mg/m² und eine Oberflächenspannung unter 34 dyn/m erreicht wird.

Alle vorgenannten Prozentangaben beziehen sich auf das Gesamtgewicht der Imprägnierlösung. Die Auftragsmengen beziehen sich auf das Trockengewicht der Hülle.

Die erfindungsgemäße Nahrungsmittelhülle wird hergestellt nach den üblichen Verfahren zur Herstellung von Nahrungsmittelhüllen, insbesondere Wursthüllen, auf Basis von Cellulose.

Der Auftrag der Innenbeschichtung auf die Innenseite der Schlauchhülle erfolgt auf übliche Weise, beispielsweise durch Einfüllen einer Beschichtungsflüssigkeit in die Schlauchhülle (GB-A-1 201 830, US-A-2 901 358, DE-A-28 01 038, DE-C-30 12 250). Die Auftragstemperatur ist gewöhnlich gleich der Umgebungstemperatur, d. h. sie liegt bei etwa 15 bis 30 °C. Das Einfüllen der Imprägnierlösung in die Schlauchhülle erfolgt zweckmäßigerweise bereits bei der Herstellung der Schlauchhülle, z. B. nach der Fällung des Cellulosehydrat-Gels aus Viskose. Der Schlauch wird dann wie üblich in aufgeblasenem Zustand getrocknet, wobei die Umsetzung der N-Methylolgruppen mit den OH-Gruppen der Cellulose ausgelöst wird. Die Verknüpfung ist so fest, daß sich Chitosan auch bei längerem Kochen mit Wasser nicht in Spuren ablöst.

Der erfindungsgemäße Überzug hat sich sowohl bei Cellulosehüllen als auch bei faserverstärkten Cellulosehüllen in der Praxis bewährt.

Sehr gute Schälergebnisse wurden bei sehr langsam und unter milden Bedingungen reifenden Dauerwursttypen in Faserhüllen beobachtet.

Durch den erfindungsgemäßen Überzug lassen sich die Hafteigenschaften von Wursthüllen, insbesondere bei zweitverpackter oder getauchter Dauerwurst, so gezielt einstellen, daß die gute Schälbarkeit der Hüllen bis zum Ende des Reifeprozesses nicht abklingt, ohne daß während des Reifeprozesses die Hülle abstellt und Falten wirft.

Als Außenpräparation behindert der erfindungsgemäße Chitosan-Überzug überraschenderweise das Eindringen cellulytischer Enzyme. Angewandt werden dafür 1,0- bis 1,5 gew.-%ige Lösungen. Die Auftragsmenge bewegt sich zwischen 90 und 120 mg/m². Der Cellulaseschutz ist doppelt so stark wie mit einer Harzaußenpräparation.

Mit dem Chitosan wurde eine völlig neue Imprägniersubstanz für Cellulosehydrat-Wursthüllen gefunden, durch die die Variationsmöglichkeiten verbreitert und die Einstellung spezifischer Effekte überhaupt erst ermöglicht werden. Es handelt sich um ein natürliches Polymeres, das lebensmittelrechtlich völlig unbedenklich ist und wegen des hohen Molekulargewichts des Chitosans mit einer minimalen Aldehydmenge quantitativ an die Cellulosehydrat-Oberfläche zu binden ist.

Die Erfindung wird durch die folgenden Beispiele näher erläutert, ohne jedoch auf die speziell dargestellten Ausführungsformen beschränkt zu sein.

### Beispiel 1

In einen Cellulosehydratgelschlauch mit Faserpapiereinlage vom Kaliber 60, der nur von außen mit Viskose beschichtet ist, werden vor dem Trocknereingang 6 bis 8 l einer Imprägnierlösung folgender Zusammensetzung eingefüllt:
- 9,9 l: Wasser
- 0,1 kg (1 Gew.-%): Chitosan (®Sea Cure 110 + L der Fa. Protan GmbH, Norderstedt, DE)
- 0,0075 l: (3 Gew.-%, bezogen auf Chitosan) Glyoxal (40 gew.-%ig)
Der Schlauch wird wie üblich in aufgeblasenem Zustand getrocknet, auf 8 bis 10 Gew.-% angefeuchtet und aufgewickelt. Die Auftragsmenge (ermittelt durch Stickstoff (N)-Bestimmung von 200 mg/5 dm² abgeschabtem Schlauch) liegt bei 138 mg/m².

Beim Reifen von Salami haftet die Hülle sehr gut am Brät und läßt sich danach gut abschälen (Bewertung: 2,5 in einer Skala von 1 bis 6, wobei 1 keine Haftung und 6 keine Schälbarkeit bedeutet).

### Beispiel 2

In einen doppelviskosierten Fasergelschlauch (Viskoseverteilung: 40 Gew.-% außen, 60 Gew.-% innen) vom Kaliber 45 wurden 4 bis 6 l einer Imprägnierlösung folgender Zusammensetzung eingefüllt:
- 9,3 l: Wasser
- 0,1 kg (1 Gew.-%): Chitosan
- 0,008 l: Glyoxal (40 gew.-%ig; 3 Gew.-%, bezogen auf Chitosan)
- 0,6 l: Softenol-Emulsion (50 gew.-%ig = 3 Gew.-%, bezogen auf Lösung)
Der Schlauch wird wie üblich in aufgeblasenem Zustand getrocknet, auf 16 bis 18 Gew.-% befeuchtet und zu Raupen gerafft. Die Auftragsmenge liegt bei 60 mg/m². Die Hüllen haften während des Reifeprozesses gut am Dauerwurstbrät, nach 4- bis 6wöchiger Reifedauer wird die Schälbarkeit mit 2,75 bewertet.

### Beispiel 3

In einen Cellulosehydratgelschlauch von Kaliber 40 wird vor dem Trocknereingang eine Lösung (2 bis 3 l) folgender Zusammensetzung eingefüllt:
- 9,35 l: Wasser
- 0,05 kg (0,5 Gew.-%): Chitosan
- 0,004 l: Glyoxal (40 gew.-%ig; 3 Gew.-%, bezogen auf Chitosan)
- 0,6 l: Softenol-Emulsion (50 gew.-%ig; 3 Gew.-%, bezogen auf Lösung)
Der Schlauch wird wie üblich getrocknet, auf 16 bis 18 Gew.-% befeuchtet und gerafft. Die Auftragsmenge liegt bei 35 mg/m². Beim Reifen von Dauerwurstbrät haftet die Hülle gut und läßt sich nach 4 Wochen problemlos abschälen (Bewertung: 2).

### Beispiel 4

Auf die äußere Oberfläche eines außenviskosierten Fasergelschlauchs vom Kaliber 60 wird mit einem Walzenantragswerk eine Lösung folgender Zusammensetzung aufgetragen:
- 44,355 l: Wasser
- 0,6 kg (1,3 Gew.-%): Chitosan
- 0,045 l: Glyoxal (40 gew.-%ig; 3 Gew.-%, bezogen auf Chitosan)
Der Schlauch wird wie üblich in aufgeblasenem Zustand getrocknet; Auftragsmenge 110 mg/m².

Bei Behandlung mit cellulytischen Enzymen wird ein ca. 25 % geringerer Gewichtsverlust als bei unbehandeltem Vergleichsmaterial festgestellt. Diese außenimprägnierten Faserdarm-Hüllen eignen sich bevorzugt für schimmelgereifte Dauerwurst, wobei außer der Cellulasehemmung vor allem auch eine gute Schimmelhaftung auf der Oberfläche beobachtet wird.

### Beispiel 5

Ein doppelviskosierter Fasergelschlauch von Kaliber 50 mit einer Viskoseverteilung von 50 % außen und 50 % innen wird innenbehandelt mit folgender Lösung:
- 9,9 l: Wasser
- 0,1 kg: Chitosan
- 7,5 ml: Glyoxal (40 gew.-%ig)
Auftragsmenge 53 g/m²
Der Schlauch wird dann unter üblichen Bedingungen mit einer PVDC-Dispersion innenbeschichtet. Auch nach beliebig langem Kochen löst sich die PVDC-Beschichtung nicht vom Untergrund ab.

## Patentansprüche

1. Schlauchförmige Nahrungsmittelhülle auf Basis von Cellulose mit einem auf ihrer inneren oder äußeren oder auf ihrer inneren und äußeren Oberfläche vorhandenen Überzug, dadurch gekennzeichnet, daß der Überzug aus chemisch mit der Cellulose verknüpftem Chitosan besteht.

2. Nahrungsmittelhülle nach Anspruch 1, dadurch gekennzeichnet, daß es sich um eine künstliche Wursthülle handelt.

3. Nahrungsmittelhülle nach Anspruch 1 oder 2, dadurch gekennzeichnet, daß die Cellulose durch Koagulation und Regenerieren aus Viskoselösung hergestellt ist.

4. Nahrungsmittelhülle nach einem der Ansprüche 1 bis 3, dadurch gekennzeichnet, daß die Auftragsmenge des Überzuges auf der inneren Oberfläche im Bereich von 25 bis 100 mg/m² Trockengewicht liegt.

5. Nahrungsmittelhülle nach einem der Ansprüche 1 bis 3, dadurch gekennzeichnet, daß die Auftragsmenge des Überzuges auf der äußeren Oberfläche im Bereich von 90 bis 120 mg/m² Trockengewicht liegt.

6. Nahrungsmittelhülle nach einem der Ansprüche 1 bis 4, dadurch gekennzeichnet, daß der Auftrag des Überzuges auf die innere Oberfläche aus einer wässrigen Überzugszusammensetzung mit einer Konzentration an Chitosan im Bereich von 0,2 bis 4 Gew.-%, bezogen auf das Gesamtgewicht der wässrigen Überzugszusammensetzung, erfolgt.

7. Nahrungsmittelhülle nach einem der Ansprüche 1 bis 3 und 5, dadurch gekennzeichnet, daß der Auftrag des Überzuges auf die äußere Oberfläche aus einer wässrigen Überzugszusammensetzung mit einer Konzentration an Chitosan im Bereich von 1 bis 15 Gew.-%, bezogen auf das Gesamtgewicht der wässrigen Überzugszusammensetzung, erfolgt.

8. Verwendung einer Nahrungsmittelhülle nach einem der Ansprüche 1 bis 7 als Wursthülle für Dauerwurst-Typen.

## Claims

1. A cellulose-based tubular foodstuffs casing having a coating present on its inner or outer surface or on its inner and outer surfaces, wherein the coating is composed of chitosan chemically linked to the cellulose.

2. The foodstuffs casing as claimed in claim 1, which is a synthetic sausage casing.

3. The foodstuffs casing as claimed in claim 1 or 2, wherein the cellulose has been prepared from viscose solution by coagulation and regeneration.

4. The foodstuffs casing as claimed in any of claims 1 to 3, wherein the quantity of coating applied to the inner surface is in the range from 25 to 100 mg/m² dry weight.

5. The foodstuffs casing as claimed in any of claims 1 to 3, wherein the quantity of coating applied to the outer surface is in the range from 90 to 120 mg/m² dry weight.

6. The foodstuffs casing as claimed in any of claims 1 to 4, wherein the coating is applied to the inner surface from an aqueous coating composition having a chitosan concentration in the range from 0.2 to 4% by weight, relative to the total weight of the aqueous coating composition.

7. The foodstuffs casing as claimed in any of claims 1 to 3 and 5, wherein the coating is applied to the outer surface from an aqueous coating composition having a chitosan concentration in the range from 1 to 15% by weight, relative to the total weight of the aqueous coating composition.

8. The use of the foodstuffs casing as claimed in any of claims 1 to 7 as a sausage casing for non-perishable sausage types.

## Revendications

1. Enveloppe alimentaire en forme tubulaire à base de cellulose présentant un revêtement disposé sur sa surface interne ou externe ou bien sur chacune des surfaces interne et externe, caractérisée en ce que le revêtement est constitué de chitosane lié chimiquement à de la cellulose.

2. Enveloppe alimentaire selon la revendication 1, caractérisée en ce qu'il s'agit d'une enveloppe pour saucisse en matière synthétique.

3. Enveloppe alimentaire selon la revendication 1 ou 2, caractérisée en ce que la cellulose est préparée par coagulation et régénération à partir d'une solution de viscose.

4. Enveloppe alimentaire selon l'une des revendications 1 à 3, caractérisée en ce que la quantité de revêtement disposée sur la surface interne est comprise entre 25 et 100 mg/m² en poids de matière sèche.

5. Enveloppe alimentaire selon l'une des revendications 1 à 3, caractérisée en ce que la quantité de revêtement disposée sur la surface externe est comprise entre 90 et 120 mg/m² en poids de matière sèche.

6. Enveloppe alimentaire selon l'une des revendications 1 à 4, caractérisé en ce que le revêtement disposé sur la surface interne est réalisé à partir d'une composition de revêtement aqueuse présentant une concentration en chitosane comprise entre 0,2 et 4% en poids calculée par rapport au poids total de la composition de revêtement aqueuse.

7. Enveloppe alimentaire selon l'une des revendications 1 à 3 et 5, caractérisée en ce que le revêtement disposé sur la surface externe est réalisé à partir d'une composition de revêtement aqueuse présentant une concentration en chitosane comprise entre 1 et 15 % en poids calculée par rapport au poids total de la composition de revêtement aqueuse.

8. Utilisation d'une enveloppe alimentaire selon l'une quelconque des revendications 1 à 7 en tant qu'enveloppe pour saucisse pour des saucissons de garde.
